Europäisches Patentamt

(19) European Patent Office

Office européen des brevets

(11) Numéro de publication : **0 296 922 B1**

(12) # FASCICULE DE BREVET EUROPEEN

(45) Date de publication du fascicule du brevet :
**06.11.91 Bulletin 91/45**

(51) Int. Cl.⁵ : **B60N 2/46**

(21) Numéro de dépôt : **88401410.1**

(22) Date de dépôt : **09.06.88**

(54) **Dispositif de réglage de la position d'un accoudoir de siège de véhicule automobile.**

(30) Priorité : **19.06.87 FR 8708633**

(43) Date de publication de la demande :
**28.12.88 Bulletin 88/52**

(45) Mention de la délivrance du brevet :
**06.11.91 Bulletin 91/45**

(84) Etats contractants désignés :
**DE ES GB IT SE**

(56) Documents cités :
**DE-C- 377 253**
**DE-C- 3 519 899**
**FR-A- 1 586 574**
**FR-A- 2 424 829**
**US-A- 1 176 881**

(56) Documents cités :
**US-A- 1 852 465**
**US-A- 2 668 582**
**US-A- 2 771 123**
**US-A- 3 779 600**

(73) Titulaire : **ECIA - EQUIPEMENTS ET
COMPOSANTS POUR L'INDUSTRIE
AUTOMOBILE
F-25400 Audincourt (Doubs) (FR)**

(72) Inventeur : **Escaravage, Gérard
5 Impasse des Graverots
F-25700 Valentigney (FR)**

(74) Mandataire : **Mestre, Jean et al
c/o CABINET LAVOIX 2, place d'Estienne
d'Orves
F-75441 Paris Cédex 09 (FR)**

EP 0 296 922 B1

# Description

La présente invention concerne un dispositif de réglage de la position d'un accoudoir de siège de véhicule automobile.

Dans l'état de la technique, que ces accoudoirs soient des accoudoirs centraux associés aux sièges arrières des véhicules automobiles ou qu'ils soient des accoudoirs latéraux des sièges avant, ils sont généralement montés déplaçables entre une position escamotée dans laquelle ils sont disposés à peu près parallèlement aux dossiers des sièges auxquels ils sont associés et une position active, à peu près parallèlement au plan défini par l'assise des sièges.

Il en résulte une certaine gène pour les utilisateurs, notamment des sièges arrières, due à la présence de ces accoudoirs dans le dossier des sièges.

Par ailleurs, tous ces accoudoirs sont montés déplaçables manuellement par l'utilisateur, ce qui dans certains cas peut présenter quelques problèmes de manipulation notamment lorsque l'accoudoir est complètement encastré dans le dossier du siège arrière.

Un mode de réalisation d'un dispositif pour accoudoir mobile escamotable pratiquement dans le plan de l'assise du siège auquel il est associé est divulgué par le document US 1852465. Ce dispositif à fonctionnement manuel comprend un mécanisme à deux jeux latéraux de biellettes montées en ciseaux dont le maintien en position érigée est obtenu par arc-boutement.

Enfin, l'intégration de ces accoudoirs pose des problèmes au niveau de la fixation de la structure de support de ceux-ci sur le véhicule.

Le but de l'invention est donc de résoudre ces problèmes en proposant un dispositif qui soit simple, fiable et d'un prix de revient peu élevé.

A cet effet, l'invention a pour objet un dispositif de réglage de la position d'un accoudoir de siège de véhicule automobile mobile entre une position active et une position escamotée de l'accoudoir approximativement dans le plan défini par l'assise du siège auquel il est associé.

Ce dispositif d'un type exposé dans le préambule de la revendication principale, offre des particularités distinctives qui ressortent notamment de la partie caractérisante de celle-ci.

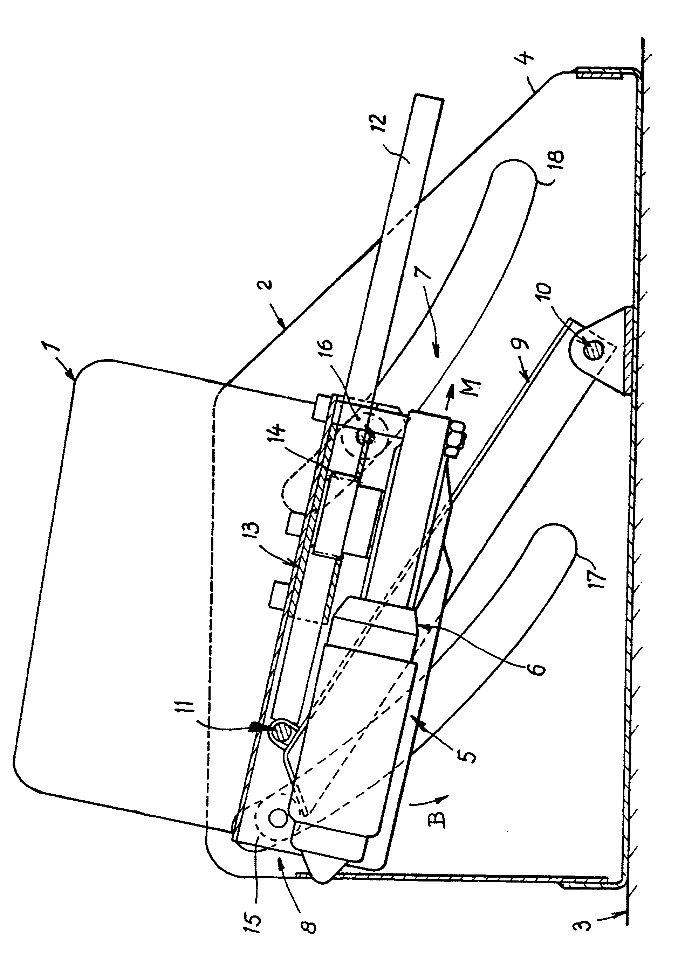

L'invention sera mieux comprise à l'aide de la description qui va suivre, donnée uniquement à titre d'exemple et faite en se référant au dessin annexé, qui représente une vue en coupe d'un dispositif selon l'invention.

Ainsi qu'on peut le voir sur cette figure, un dispositif de réglage de la position d'un accoudoir 1 de siège de véhicule automobile, comporte un châssis 2 fixé par exemple sur le plancher 3 d'un véhicule automobile par tout moyen approprié. Le châssis 2 se présente avantageusement sous la forme d'un U, dont une seule aile 4 est visible sur cette figure. Entre les ailes du châssis 2 est montée déplaçable une structure de support 5 de l'accoudoir. Cette structure de support comprend un motoréducteur 6 à double sens de rotation coopérant avec des moyens de déplacement 7 de cette structure de support 5 pour déplacer celle-ci par rapport au châssis 2 entre une position active et une position escamotée de l'accoudoir 1, dans laquelle la surface d'appui de celui-ci s'étend à peu près dans le plan défini par l'assise du siège auquel il est associé.

La structure de support 5 de l'accoudoir 1 comporte des moyens de guidage 8 adaptés pour coopérer avec des moyens complémentaires des ailes du châssis 2 pour guider cette structure de support et donc l'accoudoir lors de leur déplacement entre les deux positions.

Selon le mode de réalisation représenté sur cette figure, les moyens de déplacement 7 de la structure de support comprennent un organe formant bascule 9 articulé à l'une de ses extrémités, en 10, sur le châssis 2 et à l'autre de ses extrémités, c'est à dire en 11, sur l'une des extrémités d'une crémaillère 12. Cette crémaillère 12 est guidée dans la structure de support 5 par des moyens de guidage 13 constitués par exemple par une pièce tubulaire dans laquelle coulisse la crémaillère 12. Un pignon 14 entraîné par l'arbre de sortie du motoréducteur 6 coopère avec cette crémaillère 12 pour assurer le déplacement de la structure de support comme cela sera décrit plus en détail par la suite.

Les moyens de guidage 8 de la structure de support 5 comprennent avantageusement deux organes en saillie de part et d'autre de la structure de support 5, par exemple les organes 15 et 16 représentés sur cette figure, et adaptés pour coopérer avec deux lumières incurvées, par exemple 17 et 18, ménagées dans les ailes du châssis.

A partir de la position active de l'accoudoir 1, représenté sur cette figure, la mise sous tension du motoréducteur 6 par l'intermédiaire de moyens de commande de type connu en soi, provoque le déplacement de la structure de support 5 par rapport à la crémaillère 12 suivant une direction illustrée par la flèche M sur cette figure, l'organe formant bascule 9 étant articulé en 1 sur le châssis.

La structure de support 5 a donc tendance à se déplacer vers l'avant, en se référant à cette figure, ce qui entraîne son déplacement vers le bas, comme cela est illustré par la flèche B sur cette figure, en raison de l'interaction des parties en saillie 15 et 16, et des lumières 17 et 18. La crémaillère 12 étant articulée en 11 sur l'organe 9 formant bascule et cet organe 9 étant lui-même articulé sur le châssis, le mouvement de descente de l'ensemble disposé entre les ailes du châssis se poursuit tant qu'une action est exercée sur les moyens de commande ou tant que les parties en saillie, 15 et 16, ne viennent pas en butée contre les extrémités des lumières incurvées 17 et 18 du châssis.

En partant de la position escamotée, le déplacement de l'accoudoir vers la position active est l'inverse de ce qui vient d'être décrit.

L'accoudoir est ainsi monté déplaçable entre une position active et une position escamotée dans laquelle la surface supérieure de celui-ci est disposée à peu près dans le plan défini par l'assise du siège auquel il est associé.

Bien entendu, le dispositif selon l'invention peut être disposé entre les sièges avant d'un véhicule ou être intégré dans le siège arrière de celui-ci.

## Revendications

1. Dispositif de réglage de la position d'un accoudoir (1) de siège (10) de véhicule automobile entre une position active et une position escamotée où il est approximativement dans un plan défini par l'assise du siège auquel il est associé, qui comprend un châssis (2) fixé sur le véhicule (3), une structure de support (5) de l'accoudoir (1) qui est déplaçable relativement à ce châssis (2) entre deux positions pour placer l'accoudoir entre l'une ou l'autre de ses deux positions active et escamotable ainsi que des moyens de commande, dispositif caractérisé en ce qu'il comprend un motoréducteur (6) à double sens de rotation qui est associé à cette structure de support (5) pour la mouvoir entre ses deux positions, en ce que ces moyens de commande actionnent ce motoréducteur (6), en ce que la structure de support (5) porte ce motoréducteur (6), en ce que ce châssis (2) se présente sous la forme générale d'un U à deux ailes (4) entre lesquelles est montée déplaçable cette structure de support (5) et en ce qu'il comprend des moyens de guidage (8) associés à ces ailes (4) et structure de support (5) pour déplacer cette dernière ainsi que des moyens de déplacement (7) de cette structure de support (5) qui sont constitués d'un pignon (14) entraîné par l'arbre de sortie du motoréducteur (6), d'une crémaillère (12) en prise avec ce pignon (14) et guidée en déplacement par la structure de support (5) et d'un organe (9) formant bascule dont l'une des extrémités est articulée (10) sur le châssis (2) et dont l'autre des extrémités est articulée (9) à une extrémité de la crémaillère (12).

2. Dispositif selon la revendication 1, caractérisé en ce que les moyens de guidage (8) de la structure de support (5) comprennent des organes (15, 16) en saillie de part et d'autre de celle-ci et des lumières incurvées (17, 18) ménagées dans les ailes (4) du châssis et adaptées à coopérer avec ces organes (15, 10).

3. Dispositif selon la revendication 2, caractérisé en ce que les moyens de guidage (8) comprennent deux organes (15, 16) en saillie de part et d'autre de la structure de support (5), chaque aile (4) du châssis (2) comportant deux lumières incurvées (17, 18).

4. Dispositif selon l'une quelconque des revendications précédentes, caractérisé en ce qu'il est disposé entre les deux sièges avant du véhicule.

5. Dispositif selon l'une quelconque des revendications 1 à 4, caractérisé en ce qu'il est incorporé dans l'assise du siège arrière du véhicule automobile.

## Patentansprüche

1. Vorrichtung zur Einstellung der alge einer Armlehne (1) eines Kraftfahrzeugsitzes (10) zwischen einer aktiven Stellung und einer zurückgezogenen Stellung, wo sie sich ungefähr in der durch die Sitzfläche des Sitzes, dem sie zugeordnet ist, definierten Ebene befindet, wobei sie einen am Fahrzeug (3) befestigten Rahmen (2), einen Trägeraufbau (5) für die Armlehne (1), welcher in Bezug auf den Rahmen (2) zwischen zwei Stellungen für ein Anordnen der Armlehne zwischen der einen und anderen ihrer beiden altiven bzw. eingezogenen Stellungen verschiebbar ist, sowie Betätigungsmittel umfaßt, dadurch gekennzeichnet, daß sie ein diesem Trägeraufbau (5) zugeordnetes Motorgetriebe (6) mit Doppeldrehrichtung zum Bewegen derselben zwischen ihren beiden Stellungen umfaßt, daß die Betätigungsmittel dieses Motorgetriebe (6) betätigen, daß der Trägeraufbau (5) das Motorgetriebe (6) trägt, daß der Rahmen (2) die allgemeine Form eines U mit zwei Schenkeln (4) aufweist, zwischen welchen verschiebbar dieser Trägeraufbau (5) angebracht ist, und daß sie diesen Schenkeln (4) und dem Trägeraufbau (5) zugeordnete Führungsmittel (8) zum Verschieben des Trägeraufbaus sowie Verschiebungsmittel (7) für diesen Trägeraufbau (5) umfaßt, welche aus einem von der Ausgangswelle des Motorgetriebes (6) angetriebenen Ritzel (14), einer mit dem Ritzel (14) in Eingriff befindlichen und durch den Trägeraufbau (5) in Verschiebung geführten Zahnstange (12) und einer eine Kippvorrichtung bildende Einrichtung (9) aufgebaut ist, deren eines Ende am Rahmen (2) angelenkt (10) ist und deren anderes Ende an einem Ende der Zahnstange (12) angelenkt (9) ist.

2. Vorrichtung nach Anspruch 1, dadurch gekennzeichnet, daß die Führungsmittel (8) für den Trägeraufbau (5) beiderseits desselben vorspringende Elemente (15, 16) und in den Schenkeln (4) des Rahmens ausgebildete und für ein Zusammenwirken mit diesen Elementen (15, 16) eingerichtete gekrümmte Langlöcher (17, 18) umfassen.

3. Vorrichtung nach Anspruch 2, dadurch gekennzeichnet, daß die Führungsmittel (8) zwei beiderseits des Trägeraufbaus (5) vorspringende Elemente (15, 16) umfassen, wobei jeder Schenkel (4) des Rahmens (2) zwei gekrümmte Langlöcher (17, 18) aufweist.

4. Vorrichtung nach irgendeinem der vorstehenden Ansprüche, dadurch gekennzeichnet, daß sie zwischen den beiden Vordersitzen des Fahrzeugs angeordnet ist.

5. Vorrichtung nach irgendeinem der Ansprüche 1 bis 4, dadurch gekennzeichnet, daß sie im Sitzteil des Rücksitzes des Kraftfahrzeuges eingebaut ist.

## Claims

1. Apparatus for adjusting the position of an armrest (1) of a car seat (10) between an active position and a retracted position, where it is approximately in a plane defined by the sitting part of the seat with which it is associated, which has a frame (2) fixed to the vehicle (3), a support structure (5) for the armrest (1) displaceable relative to said frame (2) between two positions for positioning the armrest between one or other of its two active and retractable position, together with control means, characterized in that it incorporates a geared motor (6) with a double rotation direction and which is associated with said support structure (5) for moving it between its two positions, in that the control means actuate the geared motor (6), in that the support structure (5) carries the geared motor (6), in that the frame (2) is generally shaped like a U with two arms (4) between which is mounted in displaceable manner the said support structure (5) and in that it has guidance means (8) associated with said arms (4) and the support structure (5) for moving the latter, as well as means (7) for the displacement of said support structure (5), which are constituted by a pinion (14) driven by the output shaft of the geared motor (6), a rack (12) engaging with said pinion (14) and guided in displacement by the support structure (5) and a member (9) forming a rocking lever, whereof one of the ends is articulated (10) on the frame (2) and whereof the other end is articulated (9) to one end of the rack (12).

2. Apparatus according to claim 1, characterized in that the guidance means (8) for the support structure (5) comprise members (15, 16) projecting on either side thereof and inwardly curved openings (17, 18) formed in the arms (4) of the frame and which cooperate with said members (15, 10).

3. Apparatus according to claim 2, characterized in that the guidance means (8) comprise two members (15, 16) projecting on either side of the support structure (5), each arm (4) of the chassis (2) having two inwardly curved openings (17, 18).

4. Apparatus according to one of the preceding claims, characterized in that it is located between the two front seats of the vehicle.

5. Apparatus according to one of the claims 1 to 4, characterized in that it is incorporated into the sitting part of the rear seat of the vehicle.